# FASCICULE DE BREVET EUROPEEN

(11) **EP 4 408 738 B1**
(45) Date de publication et mention de la délivrance du brevet: **21.05.2025**
(21) Numéro de dépôt: 22792857.9
(22) Date de dépôt: 26.09.2022
(51) Int. Cl.: B64C 11/38, B64C 11/44, F01D 7/00, F04D 29/32, F04D 25/02, F04D 25/06

(54) **MODULE POUR UNE TURBOMACHINE D'AERONEF**
MODUL FÜR EIN FLUGZEUGTURBINENTRIEBWERK
MODULE FOR AN AIRCRAFT TURBINE ENGINE

(30) Priorité: 29.09.2021 FR 2110275
(43) Date de publication de la demande: 07.08.2024
(73) Titulaire: SAFRAN AIRCRAFT ENGINES, 75015 Paris (FR)
(72) Inventeur: FRANTZ, Caroline Marie, 77550 MOISSY-CRAMAYEL (FR); VERDIER, Bastien Pierre, 77550 MOISSY-CRAMAYEL (FR); RODA, Jean Charles Olivier, 77550 MOISSY-CRAMAYEL (FR)
(74) Mandataire: Gevers & Orès
(86) Numéro de dépôt international: PCT/FR2022/051800
(87) Numéro de publication internationale: WO 2023/052713

(56) Documents cités:
- WO-A1-2020/074839
- FR-A1- 3 087 232
- US-B2- 6 767 187

## Description

### Domaine technique de l'invention

L'invention concerne le domaine des modules pour les turbomachines d'aéronef. L'invention concerne plus particulièrement les modules comprenant un moyeu mobile en rotation et des aubes à calage variable portées par le moyeu, tels que les modules de soufflante ou d'hélice.

### Arrière-plan technique

L'état de la technique est illustré par les documents US-B2-6 767 187 et WO-A1-2020/074839.

Une turbomachine d'aéronef comprend de manière générale un module s'étendant autour d'un axe longitudinal et présentant un moyeu mobile en rotation autour de l'axe longitudinal et sur lequel sont montées des aubes. Le module est typiquement relié à un générateur de gaz. Le générateur de gaz comprend par exemple d'amont en aval un compresseur basse pression, un compresseur haute pression, une chambre de combustion, une turbine haute pression, une turbine basse pression et une tuyère d'échappement des gaz. Le rotor du compresseur haute pression est relié au rotor de la turbine haute pression par un arbre haute pression et le rotor du compresseur basse pression est relié au rotor de la turbine basse pression par un arbre basse pression. L'arbre basse pression est par ailleurs relié à un arbre d'entrainement du moyeu du module pour l'entrainer en rotation.

Le module est par exemple une soufflante ou une hélice. Dans le cas d'une soufflante, les aubes sont entourées d'un carter externe fixé à une nacelle de l'aéronef. Dans le cas d'une hélice, les aubes de soufflante sont montées en dehors de la nacelle et ne sont donc pas entourées par un carter externe.

Afin d'optimiser le fonctionnement du module et assurer son opérabilité selon les phases de vol de l'aéronef notamment en maintenant une marge au pompage suffisante, il est connu de modifier l'orientation des aubes au cours du vol de l'aéronef. A cet effet, les aubes sont mobiles autour d'un axe de calage qui s'étend perpendiculairement à l'axe longitudinal. Les aubes sont dites à calage ou à pas variable. Par exemple, les aubes à calage variable peuvent occuper une position dite d'inversion de poussée (connue sous le terme anglais « reverse ») dans laquelle celles-ci permettent de générer une contre poussée pour participer au ralentissement de l'aéronef et une position de mise en drapeau dans laquelle, en cas de défaillance ou de panne, celles-ci permettent de limiter leur résistance.

Afin d'entrainer en rotation les aubes autour de leurs axes de calage, le module de la turbomachine comprend typiquement un dispositif de changement de calage des aubes agencé à l'intérieur du moyeu du module. Le document FR-A1-3 087 232 décrit une turbomachine comprenant un module de soufflante présentant un moyeu mobile autour d'un axe longitudinal et sur lequel sont montées des aubes à calage variable. Le module comprend un dispositif de changement de calage des aubes comprenant un actionneur hydraulique relié aux aubes, une pompe d'alimentation en fluide de l'actionneur hydraulique et un moteur électrique d'entrainement de la pompe d'alimentation. Selon ce document, le moteur électrique est relié au moyeu qui est mobile en rotation autour de l'axe longitudinal. Par conséquent, le dispositif de changement de calage des aubes comprend en outre un transformateur électrique permettant d'alimenter en énergie électrique le moteur à partir d'une source d'énergie électrique située dans un repère fixe de la turbomachine. Le transformateur électrique comprend une partie fixe en rotation a0utour de l'axe longitudinal et reliée à un câble d'alimentation électrique solidaire d'une partie fixe de la turbomachine, et une partie mobile en rotation autour de l'axe longitudinal. Cette configuration ne donne pas entière satisfaction. En effet, le routage du câble d'alimentation électrique pose des difficultés. Le câble d'alimentation doit traverser des éléments tournants et fixes du module et de la turbomachine. Afin de ne pas bloquer l'alimentation électrique et faciliter l'intégration du câble, le transformateur tournant est agencé au niveau d'un support palier ce qui a tendance à augmenter l'encombrement axial et radial du module.

Il existe donc un besoin de fournir un module de turbomachine pour un aéronef, comprenant un moyeu portant des aubes à calage variable, dont l'encombrement axial et radial est réduit et dont la configuration est simplifiée.

### Résumé de l'invention

A cet effet, l'invention propose un module pour une turbomachine d'aéronef, le module comportant un axe longitudinal et comprenant :
- un moyeu s'étendant autour de l'axe longitudinal et mobile en rotation autour de l'axe longitudinal,
- des aubes portées par le moyeu, chacune des aubes étant mobiles autour d'un axe de calage s'étendant radialement par rapport à l'axe longitudinal,
- un arbre d'entrainement destiné à entrainer en rotation le moyeu autour de l'axe longitudinal,
- un réducteur de vitesse mécanique configuré pour relier un arbre basse pression de la turbomachine à l'arbre d'entrainement, le réducteur de vitesse comprenant un premier élément destiné à coopérer avec l'arbre basse pression, un second élément solidaire en rotation de l'arbre d'entrainement et un troisième élément fixe en rotation autour de l'axe longitudinal, et
- un dispositif de changement de calage des aubes autour de leurs axes de calage, le dispositif comprenant :
   un actionneur hydraulique mobile en rotation autour de l'axe longitudinal et configuré pour entrainer les aubes autour de leurs axes de calage,
   une pompe d'alimentation en fluide de l'actionneur hydraulique comprenant un axe de transmission et une enveloppe agencée autour de l'axe de transmission et solidaire en rotation de l'arbre d'entrainement, et
   une machine électrique comprenant un rotor solidaire en rotation de l'axe de transmission et un stator fixe en rotation autour de l'axe longitudinal, le stator étant destiné à être relié à un câble d'alimentation électrique traversant un passage ménagé dans le troisième élément du réducteur de vitesse.

Selon l'invention, le réducteur de vitesse mécanique présente un passage permettant le routage du câble d'alimentation électrique. Ainsi, le module selon l'invention présente une configuration simplifiée.

L'invention peut comprendre une ou plusieurs des caractéristiques suivantes, prises isolément les unes des autres ou en combinaison les unes avec les autres :
- la machine électrique comprend un moteur électrique formé par le rotor et un second stator mobile en rotation autour de l'axe longitudinal et un transformateur électrique comprenant le stator et un second rotor mobile en rotation autour de l'axe longitudinal ;
- la machine électrique comprend un moteur électrique formé par le stator et le rotor ;
- les rotor et stator sont coaxiaux ;
- la pompe est une pompe à cylindrée fixe ou variable ;
- le premier élément est un solaire, le second élément est une couronne et le troisième élément est un porte-satellites ;
- la machine électrique est agencée axialement entre l'actionneur hydraulique et le réducteur de vitesse ;
- un accumulateur hydraulique mobile en rotation autour de l'axe longitudinal et en communication fluidique avec la pompe d'alimentation ;
- un distributeur hydraulique mobile en rotation autour de l'axe longitudinal et comprenant un port d'entrée relié à l'accumulateur et un premier port de sortie relié à une première chambre de l'actionneur hydraulique, et un second port de sortie relié à une seconde chambre de l'actionneur hydraulique, le distributeur comprenant en outre un organe mobile entre une première position dans laquelle le port d'entrée est en communication fluidique avec le premier port de sortie et une seconde position dans laquelle le port d'entrée est en communication fluidique avec le second port de sortie, le module comprenant en outre un circuit électronique de commande fixe en rotation autour de l'axe longitudinal et configuré pour commander le déplacement de l'organe mobile entre les première et seconde positions.

L'invention concerne également une turbomachine pour un aéronef comprenant un module selon l'une quelconque des caractéristiques précédentes.

### Brève description des figures

D'autres caractéristiques et avantages ressortiront de la description qui suit d'un mode de réalisation non limitatif de l'invention en référence aux dessins annexés sur lesquels :
[Fig.1] la figure 1 est une représentation schématique en coupe axiale d'une demi-turbomachine d'aéronef ;
[Fig.2] la figure 2 est une vue en coupe axiale d'un module selon un premier mode de réalisation de l'invention;
[Fig.3] la figure 3 est une représentation schématique fonctionnelle du module selon le premier mode de réalisation l'invention ;
[Fig.4] la figure 4 est une vue en coupe axiale d'un module selon un second mode de réalisation de l'invention ;
[Fig. 5] la figure 5 est une représentation schématique fonctionnelle du module selon le second mode de réalisation de l'invention ;
[Fig. 6a] la figure 6a est une vue en perspective d'un premier mode de réalisation d'un transformateur électrique pouvant être mis en œuvre dans l'invention ;
[Fig. 6b] la figure 6b est une vue en perspective d'un second mode de réalisation d'un transformateur électrique pouvant être mis en œuvre dans l'invention.

### Description détaillée de l'invention

Un aéronef comprend un fuselage et au moins deux ailes s'étendant de part et d'autre du fuselage suivant l'axe du fuselage. Au moins une turbomachine est montée sous chaque aile. La turbomachine peut être un turboréacteur, par exemple une turbomachine équipée d'une soufflante carénée équipée d'aubes à calage variable, connue sous l'acronyme VPF pour « Variable Pitch Fan » en langue anglaise. Alternativement, la turbomachine peut être un turbopropulseur, par exemple une turbomachine équipée d'une hélice non carénée (« open rotor », « USF » pour «Unducted Single Fan » ou « UDF » pour « Unducted Dual Fan »). Bien entendu l'invention s'applique à d'autres types de turbomachine.

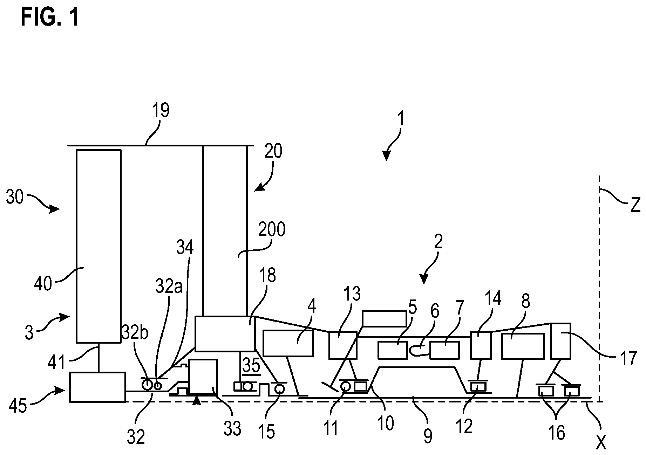

Dans la présente invention, et de manière générale, les termes « amont », « aval », « axial » et « axialement » sont définis par rapport à la circulation des gaz dans la turbomachine et ici suivant l'axe longitudinal X (et même de gauche à droite sur la figure 1). De même, les termes « radial », « radialement », « interne », « intérieur », « externe » et « extérieur » sont définis par rapport à un axe radial Z perpendiculaire à l'axe longitudinal X et au regard de l'éloignement par rapport à l'axe longitudinal X.

La figure 1 illustre un exemple de turbomachine 1. La turbomachine 1 comprend un générateur de gaz 2 et un module 3 selon l'invention. Le générateur de gaz 2 comprend d'amont en aval, un compresseur basse pression 4, un compresseur haute pression 5, une chambre de combustion 6, une turbine haute pression 7 et une turbine basse pression 8. Les rotors du compresseur basse pression 4 et de la turbine basse pression 8 sont reliés mécaniquement par un arbre basse pression 9 de manière à former un corps basse pression. Les rotors du compresseur haute pression 5 et de la turbine haute pression 7 sont reliés mécaniquement par un arbre haute pression 10 de manière à former un corps haute pression. L'arbre haute pression 10 s'étend radialement au moins en partie à l'extérieur de l'arbre basse pression 9. L'arbre basse pression 9 et l'arbre haute pression 10 sont coaxiaux. Le corps haute pression est guidé en rotation autour de l'axe longitudinal X par un premier palier 11 à roulements en amont et un deuxième palier 12 à roulements en aval. Le premier palier 11 est monté entre un carter inter-compresseur 13 et une extrémité amont de l'arbre haute pression 10. Le carter inter compresseur 13 est agencé axialement entre les compresseurs basse et haute pression 4, 5. Le deuxième palier 12 est monté entre un carter inter-turbine 14 et une extrémité aval de l'arbre haute pression 10. Le carter inter-turbine 14 est agencé axialement entre les turbines basse et haute pression 8, 7. Le corps basse pression est guidé en rotation autour de l'axe longitudinal X via un troisième palier 15 à roulements et un quatrième palier 16 à roulements. Le quatrième palier 16 est par exemple un palier double. Le quatrième palier 16 est monté entre un carter d'échappement 17 et une extrémité aval de l'arbre basse pression 9. Le carter d'échappement 17 est situé en aval de la turbine basse pression 8. Le troisième palier 15 est monté entre un carter d'entrée 18 et une extrémité amont de l'arbre basse pression 9. Le carter d'entrée 18 est agencé en amont du compresseur basse pression 4. Plus particulièrement, le carter d'entrée 18 est agencé axialement entre le module 3 et le compresseur basse pression 4.

Dans l'exemple de la figure 1, le module 3 est monté en amont du générateur de gaz 2. Avantageusement, selon cet exemple, un redresseur 20 est agencé axialement entre le module 3 et le compresseur basse pression 4. Le redresseur 20 comprend par exemple des aubes 200 montées sur le carter d'entrée 18. De telles aubes 200 sont appelées OGV pour « Outlet Guide Vanes » en langue anglaise. Le redresseur 20 permet de redresser le flux en aval du module 3 pour optimiser le fonctionnement de la turbomachine 1.

Selon un autre mode de réalisation non représenté, le module 3 est monté en aval du générateur de gaz 2.

En outre, le module 3 selon l'invention comprend des aubes 30.

Dans l'exemple de la figure 1, les aubes 30 sont entourées par un carter externe 19. Le carter externe 19 est fixée à une nacelle (non représentée) de l'aéronef. Selon cet exemple, le module 2 est un module de soufflante.

Selon un autre exemple non représenté, le module 2 est un module d'hélice.

Les aubes 30 ne sont pas entourées par un carter externe. Les aubes 30 sont, selon cet exemple, agencées autour de la nacelle.

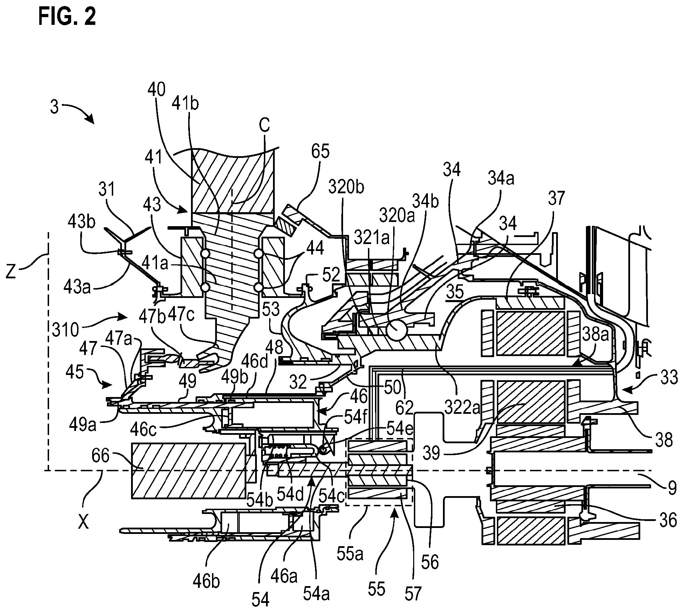

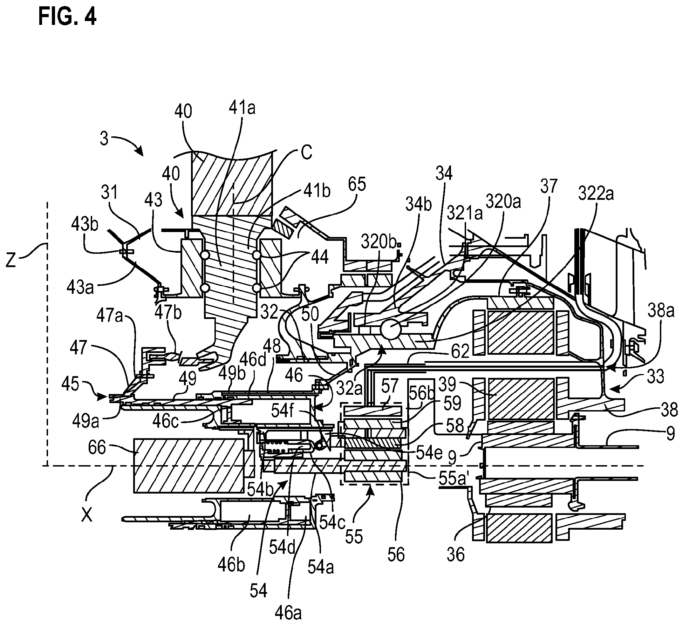

Comme visible sur les figures 2 et 4, les aubes 30 sont portées par un moyeu 43. Le moyeu 43 est annulaire. Il est agencé autour de l'axe longitudinal X.

Les aubes 30 sont régulièrement réparties sur le moyeu 43. Les aubes 30 s'étendent radialement depuis le moyeu 43. Il comprend un espace interne 310. Le moyeu 43 comprend en outre des logements internes répartis régulièrement autour de l'axe longitudinal X.

Le moyeu 43 est solidaire d'un cône 31 centré sur l'axe longitudinal X. Le cône 31 est agencé en amont du moyeu 43. Le cône 31 forme un bec d'entrée d'air dans la turbomachine 1. Le moyeu 43 est par exemple relié au cône 31 par un bras de fixation 43a s'étendant radialement par rapport à l'axe longitudinal X. Le bras de fixation 43a est relié au cône 31 et au moyeu 43 par un ensemble de vis et d'écrous 43b par exemple. Les aubes 30 sont entrainées en rotation autour de l'axe longitudinal X. Chaque aube 30 comprend un pied 41 et une pale 40 s'étendant radialement vers l'extérieur depuis le pied 41.

Le pied 41 comprend un tenon 41b relié à un manchon 41a. Le pied 41 est monté pivotant suivant un axe de calage C dans le logement interne du moyeu 43. Avantageusement, un pied 41 est monté par logement interne. Le manchon 41a est centré sur l'axe de calage C. Le manchon 41a est logé dans le logement interne du moyeu 43.

L'axe de calage C est parallèle à l'axe radial Z et s'étend donc radialement par rapport à l'axe longitudinal X. Le pied 41 est monté pivotant dans le moyeu 43 grâce à deux paliers de guidage 44 montés dans chaque logement interne et de manière superposée suivant l'axe radial Z. Ces paliers 44 sont de préférence, mais non limitativement, des roulements à billes.

Le moyeu 43 est mobile en rotation autour de l'axe longitudinal X. Pour entrainer le moyeu 43 en rotation autour de l'axe longitudinal X et partant, les aubes 30, le module 3 comprend un arbre d'entrainement 32. L'arbre d'entrainement 32 est agencé au moins en partie dans l'espace interne 310. Il est centré sur l'axe longitudinal X. L'arbre d'entrainement 32 est guidé en rotation dans l'espace interne 310 par un premier palier de guidage 32a et un second palier de guidage 32b. Le premier palier de guidage 32a est par exemple un roulement à billes. Le second palier de guidage 32b est par exemple un roulement à rouleaux. Le premier palier de guidage 32a est agencé en aval du second palier de guidage 32b. Le premier palier de guidage 32a comprend des billes 320a agencées entre une bague externe 321a et une bague interne 322a. Le second palier de guidage 32b comprend des rouleaux 320b agencés entre la bague externe 321a et la bague interne 322a. La bague interne 322a est solidaire de l'arbre d'entrainement 32 et la bague externe 321a est portée par un support palier 34. Le support palier 34 est fixe. Il s'étend radialement entre une bride d'extrémité 34a reliée au carter d'entrée 18 et une semelle 34b qui coopère avec la bague externe 321a.

L'arbre d'entrainement 32 comprend une extrémité amont sur laquelle est fixé un tourillon 53. Le tourillon 53 s'étend radialement vers l'extérieur. Le tourillon 53 est relié par exemple par une première bride 52 au moyeu 43 pour l'entrainer en rotation autour de l'axe longitudinal X.

L'arbre d'entrainement 32 est entrainé en rotation par l'arbre basse pression 9 par exemple. Afin de réduire la vitesse de rotation de l'arbre d'entrainement 32 par rapport à l'arbre basse pression 9, le module 3 comprend avantageusement un réducteur de vitesse 33 mécanique. Le réducteur de vitesse 33 est agencé dans une enceinte de lubrification 35. L'enceinte de lubrification 35 est par exemple agencée axialement entre le troisième palier 15 et le second palier de guidage 32b.

Le réducteur de vitesse 33 comprend un premier élément 36 destiné à coopérer avec l'arbre basse pression 9, un second élément 37 solidaire en rotation de l'arbre d'entrainement 32 et un troisième élément 38 fixe en rotation. Le troisième élément 38 est par exemple relié à un stator de la turbomachine 1 tel que le carter d'entrée 18 ou du module 3. Le réducteur de vitesse 33 comprend en outre des satellites 39.

Le troisième élément 38 présente un passage 38a. Le passage 38a est traversant. Le passage 38a présente une section elliptique, circulaire, polygonale ou toute autre forme.

Le premier élément 36 est un planétaire intérieur, également appelé solaire, qui est couplé en rotation avec l'arbre basse pression 9, le second élément 37 est une couronne extérieure couplée en rotation avec l'arbre d'entrainement 32 et le troisième élément 38 est un porte-satellites fixe en rotation par rapport à l'axe longitudinal X. Le porte-satellites est par exemple solidaire du carter d'entrée 18. Dans cette configuration du réducteur de vitesse 33, les satellites 39 sont portés par le troisième élément 38 et tournent chacun autour d'un axe sensiblement parallèle à l'axe longitudinal X. Chaque satellites 39 engrène avec le premier élément 36 et le second élément 37. Les satellites 39 sont disposés radialement entre le premier élément 36 et le second élément 37. Dans cette configuration, le premier élément 36 qui est le planétaire forme l'entrée du réducteur de vitesse 33 tandis que le second élément 37 qui est la couronne extérieure forme la sortie du réducteur de vitesse 33. Le réducteur de vitesse 33 est un réducteur de vitesse 33 à train d'engrenage planétaire. Le passage 38a est ménagé dans le porte-satellites.

Chaque aube 30 est mobile en rotation autour de l'axe de calage C. A cet effet, selon l'invention, le module 3 comprend un dispositif 45 de changement de calage des aubes 30 autour de leurs axes de calage C. Le dispositif 45 est un dispositif électrohydraulique. Le dispositif 45 est au moins en partie agencé dans l'espace interne 310 du moyeu 43. Ceci permet de faciliter la maintenance du dispositif 45 car il est facilement accessible. Le dispositif 45 est agencé en amont du réducteur de vitesse 33. Le dispositif 45 comprend un actionneur 46 hydraulique qui est mobile en rotation autour de l'axe longitudinal X et configuré pour entrainer les aubes 30 autour de leurs axes de calage C. L'actionneur 46 est par exemple un vérin hydraulique. Il est par exemple agencé dans l'espace interne 310.

L'actionneur 46 comprend un boitier 48 et un corps mobile 49. Le corps mobile 49 est mobile en translation dans le boitier 48. Le boitier 48 est solidaire en rotation de l'arbre d'entrainement 32. Le boitier 48 est cylindrique, centré sur l'axe longitudinal X. Une telle configuration permet de limiter l'encombrement de l'actionneur 46 dans le moyeu 43 tant axialement que radialement. Le boitier 48 comprend une virole 50 qui s'étend radialement vers l'extérieur depuis une surface externe du boitier 48 et qui est fixée à l'arbre d'entrainement 32.

Le corps mobile 49 se déplace en translation le long de l'axe longitudinal X dans le boitier 48. Le boitier 48 s'étend radialement autour du corps mobile 49. Le corps mobile 49 se présente sous la forme d'une tige axiale qui s'étend entre une première extrémité 49a et une deuxième extrémité 49b. L'actionneur 46 comprend en outre une première chambre 46a et une seconde chambre 46b. Les première et seconde chambres 46a, 46b sont délimitées axialement par une paroi annulaire 46c agencée dans le boitier 48. La paroi annulaire 46c est solidaire de la deuxième extrémité 49b du corps mobile 49. Le corps mobile 49 se déplace en translation sous l'effet de la pression d'un fluide circulant dans chaque chambre 46a, 46b. L'actionneur 46 comprend en outre une canalisation 46d. La canalisation 46d présente un axe parallèle à l'axe longitudinal X. La canalisation 46d est par exemple ménagée dans le boitier 48. La canalisation 46d débouche dans la seconde chambre 46b.

Le dispositif 45 comprend avantageusement un mécanisme de liaison 47 solidaire des aubes 30 et de l'actionneur 46. Le mécanisme de liaison 47 permet de transformer le mouvement de translation de l'actionneur hydraulique 46 en un mouvement de rotation des aubes 30. Le mécanisme de liaison 47 comprend une pièce annulaire 47a, une biellette 47b et un excentrique 47c. La pièce annulaire 47a est fixée de manière amovible au corps mobile 49 et par exemple à la deuxième extrémité 49a. La pièce annulaire 47a comprend une bride de liaison qui est reliée de manière amovible à la biellette 47b. La biellette 47b coopère avec l'excentrique 47c qui est solidaire de l'aube 30 et notamment relié au pied 41. La pièce annulaire 47a permet ainsi un démontage de l'actionneur hydraulique 46 lors d'opérations de maintenance par exemple sans intervenir sur les aubes 30 qui restent fixées aux biellettes 47b par l'intermédiaire de l'excentrique 47c.

Afin d'entrainer en translation le corps mobile 49 pour entrainer les aubes 30 autour de leurs axes de calage C via le mécanisme de liaison 47, le dispositif 45 selon l'invention comprend en outre une pompe 54 d'alimentation en fluide de l'actionneur 46. La pompe 54 est agencée en amont du réducteur 33. La pompe 54 est agencée à l'intérieur de l'arbre d'entrainement 32. La pompe 54 est mobile en rotation autour de l'axe longitudinal X.

La pompe 54 est une pompe hydraulique de type volumétrique. La pompe 54 est par exemple à cylindrée fixe telle que représenté sur les figures 2 et 4 ou à cylindrée variable.

La pompe 54 comprend un axe de transmission 54a et une enveloppe 54b agencée autour de l'axe de transmission 54a. L'enveloppe 54b délimite un espace interne dans lequel est agencé au moins un piston 54c présentant une chambre de réception 54d du fluide . Le piston 54c est relié à un plateau 54e par une liaison rotule 54f. La pompe 54 est ainsi par exemple à plateau oscillant.

L'axe de transmission 54a est centré sur l'axe longitudinal X. L'enveloppe 54b est solidaire en rotation de l'arbre d'entrainement 32. Plus particulièrement, l'enveloppe 54b est solidaire de l'actionneur 46 pour un entrainement en rotation conjoint autour de l'axe longitudinal X par l'arbre d'entrainement 32.

La pompe 54 est fluidiquement raccordée à un circuit hydraulique d'alimentation C. Le circuit hydraulique d'alimentation C comprend un avantageusement un accumulateur hydraulique 66. L'accumulateur hydraulique 66 permet de compenser les variations de volume du fluide dues à sa compressibilité et sa dilatation. L'accumulateur hydraulique 66 est en communication fluidique avec la pompe 54. L'accumulateur hydraulique 66 peut être intégré à la pompe 54. Il est avantageusement agencé dans l'actionneur hydraulique 46.

L'accumulateur hydraulique 66 est ainsi mobile en rotation autour de l'axe longitudinal X. Avantageusement, le circuit hydraulique d'alimentation C comprend au moins une vanne de sécurité 660 et au moins un clapet anti-retour 661.

La pompe 54 et l'accumulateur hydraulique 66 étant mobiles en rotation par rapport à l'axe longitudinal X, il est possible selon l'invention de s'affranchir d'un dispositif de transfert hydraulique tournant. Par ailleurs, le circuit hydraulique d'alimentation C est un circuit fermé. Il est indépendant d'un circuit hydraulique de lubrification de la turbomachine 1 destiné par exemple à lubrifier le réducteur 33. Le fluide du circuit hydraulique d'alimentation C alimentant l'actionneur hydraulique 46 est par exemple un liquide hydraulique. Le liquide est par exemple de l'huile sous pression ou un ester phosphaté tel que le Skydrol. Le fluide est ainsi un fluide circulant en circuit fermé dans le circuit hydraulique d'alimentation C et est indépendant du circuit de lubrification de la turbomachine 1. Le fluide peut donc être différent de l'huile utilisée dans le circuit de lubrification de la turbomachine 1. Le fluide peut ainsi présenter un point de figeage plus bas ou encore des caractéristiques de viscosité plus adaptées aux conditions de la turbomachine 1, notamment lorsque les températures d'opération de la turbomachine 1 sont basses. Par exemple, le fluide du circuit hydraulique d'alimentation C présente un point de figeage compris entre -70°C et -50°C, notamment compris entre -65°C et -60°C. Aussi, la pression du fluide dans le circuit hydraulique d'alimentation C est avantageusement supérieure à 100 bars, préférentiellement supérieure à 200 bars et encore plus préférentiellement comprise entre 250 bars et 350 bars. Le circuit hydraulique d'alimentation C étant fermé, il est non aéré et il est par conséquent possible de mettre en œuvre des pressions dans le circuit hydraulique élevées. Ceci permet de diminuer l'encombrement de l'actionneur hydraulique 46.

Le circuit hydraulique d'alimentation C comprend par exemple un circuit principal C1 reliant la pompe 54 à l'actionneur hydraulique 46 et un circuit de récupération C2 reliant l'actionneur hydraulique 46 à la pompe 54. Selon l'invention, le module 3 comprend en outre une machine électrique 55. La machine électrique 55 permet d'alimenter la pompe 54 en énergie mécanique pour assurer son fonctionnement lorsque requis. La machine électrique 55 permet une meilleure opérabilité du dispositif 45. En effet, la pompe 54 est entrainée par la machine électrique 55 et est donc indépendante du régime de rotation de l'arbre basse pression 9 ou l'arbre haute pression 10 qui pourraient être utilisés pour prélever mécaniquement de la puissance pour entrainer la pompe 54.

La machine électrique 55 est agencée axialement entre l'actionneur hydraulique 46 et le réducteur de vitesse 33.

La machine électrique 55 comprend un rotor 56 mobile en rotation autour de l'axe longitudinal X. Le rotor 56 est solidaire en rotation de l'axe de transmission 54a. Le rotor 56 est annulaire et il est agencé autour de l'axe de transmission 54a. La machine électrique 55 comprend en outre un stator 57 qui est fixe en rotation autour de l'axe longitudinal X. Il est par exemple relié au porte-satellites. Le stator 57 est annulaire et il est agencé à l'extérieur du rotor 56.

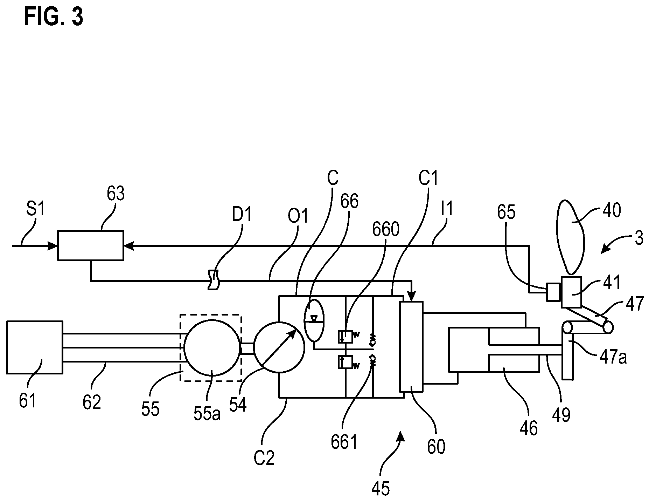

Selon un premier mode de réalisation représenté sur les figures 2 et 3, la machine électrique 55 comprend un moteur électrique 55a. Le moteur électrique 55a est formé par le rotor 56 et le stator 57.

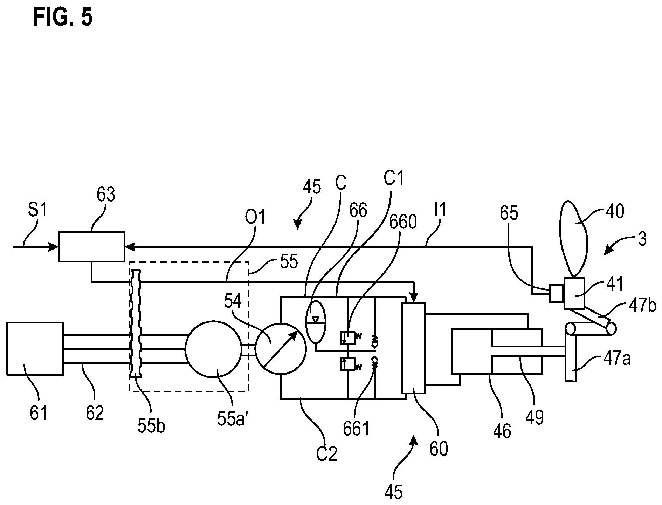

Selon un second mode de réalisation représenté sur les figures 4 et 5, la machine électrique 55 comprend un moteur électrique 55a' et un transformateur électrique 55b. Selon ce second mode, le moteur électrique 55a' est mobile en rotation autour de l'axe longitudinal X. Le moteur électrique 55a' est agencé coaxialement à l'intérieur du transformateur électrique 55b. Une telle configuration permet de réduire l'encombrement axial du module 3. Le moteur électrique 55a' est formé par le rotor 56 qui est solidaire en rotation de l'axe de transmission 54a et un second stator 58 agencé autour du rotor 56. Le second stator 58 est mobile en rotation autour de l'axe longitudinal X. Il est solidaire en rotation par exemple de l'enveloppe 54b.

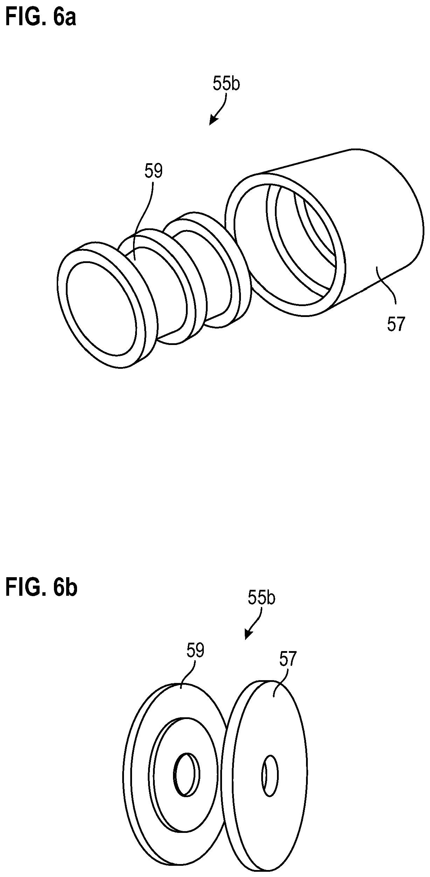

Le transformateur électrique 55b est par exemple représenté sur les figures 6a et 6b. Le transformateur électrique 55b comprend le stator 57 qui est fixe en rotation autour de l'axe longitudinal X et un second rotor 59 mobile en rotation autour de l'axe longitudinal X. Le second rotor 59 est solidaire en rotation du second stator 58.

Selon un premier mode de réalisation représenté sur la figure 6a, le transformateur électrique 55b est de type radial. Selon ce premier mode de réalisation, le second rotor 59 est agencé à l'intérieur du stator 57 de manière coaxiale. Le second rotor 59 est ainsi agencé radialement entre le second stator 58 et le stator 57.

Selon un second mode de réalisation représenté sur la figure 6b, le transformateur électrique 55b est de type axial.

Selon un exemple, le transformateur électrique 55b comprend en outre des balais (non représentés) permettant de transférer l'énergie électrique du stator 57 au second rotor 59. Selon un autre exemple, le transfert d'énergie électrique du stator 57 au second rotor 59 est sans contact. En effet, les balais ont l'inconvénient de s'user rapidement et ainsi de réduire la longévité du transformateur électrique 55b. Une technologie sans contact permet donc d'assurer la longévité du transformateur électrique 55b.

Un câble d'alimentation électrique 62 permet d'acheminer de l'énergie électrique jusqu'à la machine électrique 55. Le câble d'alimentation électrique 62 est fixe en rotation autour de l'axe longitudinal X. Le câble d'alimentation électrique 62 est relié à un réseau électrique 61 de la turbomachine 1 qui est fixe en rotation autour de l'axe longitudinal X. Il est ainsi relié à une partie fixe de la turbomachine 1. Le câble d'alimentation électrique 62 est par ailleurs relié au stator 57.

Afin de faciliter le routage du câble d'alimentation électrique 62, selon l'invention, ce dernier traverse le passage 38a ménagé dans le troisième élément 38 du réducteur de vitesse 33.

Selon le premier mode de réalisation, le câble d'alimentation électrique 62 permet d'alimenter en énergie électrique le moteur 55a.

Selon le second mode de réalisation, le câble d'alimentation électrique 62 permet d'alimenter le transformateur 55b. Le transformateur 55b assure ensuite le transfert d'énergie électrique au moteur 55a'. Le transformateur 55b permet ainsi le transfert d'énergie électrique d'un repère fixe à un repère tournant.

Préférentiellement, le module 3 comprend un distributeur hydraulique 60. Le distributeur hydraulique 60 est mobile en rotation autour de l'axe longitudinal X. Le distributeur hydraulique 60 permet de distribuer le fluide dans la première ou la seconde chambre 46a, 46b de l'actionneur hydraulique 46 via la canalisation 46d par exemple. A cet effet, le distributeur hydraulique 60 comprend un port d'entrée relié à l'accumulateur hydraulique 66 via le circuit hydraulique d'alimentation C par exemple et un premier port de sortie relié à la première chambre 46a de l'actionneur hydraulique 46, et un second port de sortie relié à la seconde chambre 46b de l'actionneur hydraulique 46. Le distributeur hydraulique 60 comprend en outre un organe mobile entre une première position dans laquelle le port d'entrée est en communication fluidique avec le premier port de sortie et une seconde position dans laquelle le port d'entrée est en communication fluidique avec le second port de sortie.

Afin de piloter le distributeur hydraulique 60, le module 3 comprend en outre un circuit électronique de commande 63, qui est fixe en rotation autour de l'axe longitudinal. Le circuit électronique de commande 63 est par exemple situé dans la turbomachine 1. Le circuit électronique de commande 63 est par exemple un calculateur numérique tel qu'un FADEC pour « Full Authority Digital Electronic Computer » en langue anglaise.

Le module 3 comprend avantageusement un capteur 65. Le capteur 65 permet de mesurer une information I1 qui est transmise au circuit électronique de commande 63. L'information I1 est par exemple la position du pied 41 de l'aube 30 ou du corps mobile 49 de l'actionneur hydraulique 46.

Selon un premier mode de réalisation représenté sur les figures 2 à 5, le capteur 65 est un capteur de position. Le capteur de position est configuré pour mesurer la position du pied 41 de l'aube 30. Le capteur de position coopère par exemple avec le pied 41. Le capteur est par exemple un capteur électromagnétique.

Selon un autre mode de réalisation non représenté, le capteur 65 est par exemple un capteur linéaire de type LVDT pour « Linear Variable Differential Transformer » en langue anglaise. Le capteur 65 est configuré pour mesurer la position du corps mobile 49 de l'actionneur hydraulique 46. Il est par exemple agencé dans l'actionneur hydraulique 46.

Le capteur 65 fournit l'information I1 au circuit électronique de commande 63. Le circuit électronique de commande 63 va alors fournir un ordre O1 au distributeur hydraulique 60 qui va déterminer la position du corps mobile 46 de l'actionneur hydraulique 46 afin de modifier en conséquence le calage des aubes 30.

Le circuit électronique de commande 63 étant fixe et le distributeur hydraulique 60 étant mobile en rotation autour de l'axe longitudinal X, la transmission de l'ordre O1 peut être assuré dans le second mode de réalisation de la figure 5 par le transformateur électrique 55b de la machine électrique 55. Dans le premier mode de réalisation de la figure 3 dans lequel la machine électrique 55 comprend uniquement le moteur électrique 55a, la transmission de l'ordre O1 peut être assuré par un dispositif de transfert du signal D1.

Le circuit électronique de commande 63 reçoit également ou alternativement un signal S1 sur les conditions de vol de l'aéronef et/ou l'état de la turbomachine 1. Le signal S1 est également ou alternativement pris en compte pour fournir l'ordre O1 au distributeur hydraulique 60 qui va déterminer la position du corps mobile 46 de l'actionneur hydraulique 46 afin de modifier en conséquence le calage des aubes 30.

## Revendications

1. Module (3) pour une turbomachine (1) d'aéronef, le module (3) comportant un axe longitudinal (X) et comprenant :
- un moyeu (43) s'étendant autour de l'axe longitudinal (X) et mobile en rotation autour de l'axe longitudinal (X),
- des aubes (30) portées par le moyeu (43), chacune des aubes (30) étant mobiles autour d'un axe de calage (C) s'étendant radialement par rapport à l'axe longitudinal (X),
- un arbre d'entrainement (32) destiné à entrainer en rotation le moyeu (43) autour de l'axe longitudinal (X),
- un réducteur de vitesse (33) mécanique configuré pour relier un arbre basse pression (9) de la turbomachine (1) à l'arbre d'entrainement (32), et
- un dispositif (45) de changement de calage des aubes (30) autour de leurs axes de calage (C), le dispositif (45) comprenant :
un actionneur hydraulique (46) mobile en rotation autour de l'axe longitudinal (X) et configuré pour entrainer les aubes (30) autour de leurs axes de calage (C),
une pompe (54) d'alimentation en fluide de l'actionneur hydraulique (46) comprenant un axe de transmission (54a) et une enveloppe (54b) agencée autour de l'axe de transmission (54a) et solidaire en rotation de l'arbre d'entrainement (32), et
une machine électrique (55) comprenant un rotor (56) solidaire en rotation de l'axe de transmission (54a) et un stator (57) fixe en rotation autour de l'axe longitudinal (X), le stator (57) étant destiné à être relié à un câble d'alimentation électrique (62),
**caractérisé en ce que** le réducteur de vitesse (33) comprend un premier élément (36) destiné à coopérer avec l'arbre basse pression (9), un second élément (37) solidaire en rotation de l'arbre d'entrainement (32) et un troisième élément (38) fixe en rotation autour de l'axe longitudinal (X), et
**en ce qu'**un passage (38a) du câble d'alimentation électrique (62) est ménagé dans le troisième élément (38) du réducteur de vitesse (33).

2. Module selon la revendication précédente, **caractérisé en ce que** la machine électrique (55) comprend un moteur électrique (55a') formé par le rotor (56) et un second stator (58) mobile en rotation autour de l'axe longitudinal (X) et un transformateur électrique (55b) comprenant le stator (57) et un second rotor (59) mobile en rotation autour de l'axe longitudinal (X).

3. Module selon la revendication 1, **caractérisé en ce que** la machine électrique (55) comprend un moteur électrique (55a) formé par le stator (57) et le rotor (56).

4. Module selon l'une quelconque des revendications précédentes, **caractérisé en ce que** les rotor (56) et stator (57) sont coaxiaux.

5. Module selon l'une quelconque des revendications précédentes, **caractérisé en ce que** la pompe (54) est une pompe à cylindrée fixe ou variable.

6. Module selon l'une quelconque des revendications précédentes, **caractérisé en ce que** le premier élément (36) est un solaire, le second élément (37) est une couronne et le troisième élément (38) est un porte-satellites.

7. Module selon l'une quelconque des revendications précédentes, **caractérisé en ce que** la machine électrique (55) est agencée axialement entre l'actionneur hydraulique (46) et le réducteur de vitesse (33).

8. Module selon l'une quelconque des revendications précédentes, **caractérisé en ce qu'**il comprend un accumulateur (66) hydraulique mobile en rotation autour de l'axe longitudinal (X) et en communication fluidique avec la pompe d'alimentation (54).

9. Module selon la revendication précédente, **caractérisé en ce qu'**il comprend un distributeur (60) hydraulique mobile en rotation autour de l'axe longitudinal (X) et comprenant un port d'entrée relié à l'accumulateur (66) et un premier port de sortie relié à une première chambre de l'actionneur hydraulique (46), et un second port de sortie relié à une seconde chambre de l'actionneur hydraulique (46), le distributeur (60) comprenant en outre un organe mobile entre une première position dans laquelle le port d'entrée est en communication fluidique avec le premier port de sortie et une seconde position dans laquelle le port d'entrée est en communication fluidique avec le second port de sortie, le module (3) comprenant en outre un circuit électronique de commande (63) fixe en rotation autour de l'axe longitudinal (X) et configuré pour commander le déplacement de l'organe mobile entre les première et seconde positions.

10. Turbomachine (1) pour un aéronef, **caractérisée en ce qu'**elle comprend un module (3) selon l'une quelconque des revendications précédentes.

## Patentansprüche

1. Modul (3) für ein Turbotriebwerk (1) eines Luftfahrzeugs, wobei das Modul (3) eine Längsachse (X) umfasst und Folgendes umfasst:
- eine Nabe (43), die sich um die Längsachse (X) herum erstreckt und die um die Längsachse (X) herum drehbeweglich ist,
- Schaufeln (30), die von der Nabe (43) getragen werden, wobei jede der Schaufeln (30) um eine Feststellpositionachse (C) beweglich ist, die sich in Bezug auf die Längsachse (X) radial erstreckt,
- eine Antriebswelle (32), die dazu bestimmt ist, die Nabe (43) um die Längsachse (X) herum in Drehung zu versetzen,
- ein mechanisches Untersetzungsgetriebe (33), das konfiguriert ist, um eine Niederdruckwelle (9) des Turbotriebwerks (1) mit der Antriebswelle (32) zu verbinden, und
- eine Vorrichtung (45) zur Änderung der Feststellposition der Schaufeln (30) um ihren Feststellpositionachsen (C) herum, wobei die Vorrichtung (45) Folgendes umfasst:
eine hydraulische Betätigungsvorrichtung (46), die um die Längsachse (X) herum drehbeweglich ist und zum Antreiben der Schaufeln (30) um ihren Feststellpositionachsen (C) herum konfiguriert ist,
eine Pumpe (54) zur Versorgung der hydraulischen Betätigungsvorrichtung (46) mit Fluid, die eine Antriebsachse (54a) und eine Ummantelung (54b) umfasst, die um die Antriebsachse (54a) herum angeordnet und drehstarr mit der Antriebswelle (32) verbunden ist, und
eine elektrische Maschine (55), die einen Rotor (56), der drehstarr mit der Antriebsachse (54a) verbunden ist, und einen Stator (57) umfasst, der um die Längsachse (X) herum drehfest ist, wobei der Stator (57) dazu bestimmt ist, mit einem Kabel zur elektrischen Versorgung (62) verbunden zu werden,
**dadurch gekennzeichnet, dass** das Untersetzungsgetriebe (33) ein erstes Element (36), das dazu bestimmt ist, mit der Niederdruckwelle (9) zusammenzuwirken, ein zweites Element (37), das drehstarr mit der Antriebswelle (32) verbunden ist, und ein drittes Element, das um die Längsachse (X) herum drehfest ist, umfasst, und dadurch, dass ein Durchgang (38a) des Kabels zur elektrischen Versorgung (62) in dem dritten Element (38) des Untersetzungsgetriebes (33) ausgebildet ist.

2. Modul nach dem vorstehenden Anspruch, **dadurch gekennzeichnet, dass** die elektrische Maschine (55) einen elektrischen Motor (55a'), der durch den Rotor (56) und einen zweiten Stator (58) gebildet wird, die um die Längsachse (X) herum drehbeweglich sind, und einen elektrischen Transformator (55b) umfasst, der den Stator (57) und einen zweiten Rotor (59) umfasst, der um die Längsachse (X) herum drehbeweglich ist.

3. Modul nach Anspruch 1,
**dadurch gekennzeichnet, dass** die elektrische Maschine (55) einen elektrischen Motor (55a) umfasst, der durch den Stator (57) und den Rotor (56) gebildet wird.

4. Modul nach einem der vorstehenden Ansprüche,
**dadurch gekennzeichnet, dass** der Rotor (56) und Stator (57) koaxial sind.

5. Modul nach einem der vorstehenden Ansprüche,
**dadurch gekennzeichnet, dass** die Pumpe (54) eine Pumpe mit festem oder variablem Hubraum ist.

6. Modul nach einem der vorstehenden Ansprüche,
**dadurch gekennzeichnet, dass** das erste Element (36) ein Sonnenrad ist, das zweite Element (37) eine Krone ist und das dritte Element (38) ein Satellitenträger ist.

7. Modul nach einem der vorstehenden Ansprüche,
**dadurch gekennzeichnet, dass** die elektrische Maschine (55) axial zwischen der hydraulischen Betätigungsvorrichtung (46) und dem Untersetzungsgetriebe (33) angeordnet ist.

8. Modul nach einem der vorstehenden Ansprüche,
**dadurch gekennzeichnet, dass** es einen hydraulischen Akkumulator (66) umfasst, der um die Längsachse (X) herum drehbeweglich und in strömungstechnischer Kommunikation mit der Versorgungspumpe (54) vorliegt.

9. Modul nach dem vorstehenden Anspruch, **dadurch gekennzeichnet, dass** es einen hydraulischen Verteiler (60) umfasst, der um die Längsachse (X) herum drehbeweglich ist und einen mit dem Akkumulator (66) verbundenen Einlassanschluss und einen mit einer ersten Kammer der hydraulischen Betätigungsvorrichtung (46) verbundenen ersten Auslassanschluss und einen mit einer zweiten Kammer der hydraulischen Betätigungsvorrichtung (46) verbundenen zweiten Auslassanschluss umfasst, wobei der Verteiler weiter ein zwischen einer ersten Position, in der der Einlassanschluss in strömungstechnischer Kommunikation mit dem ersten Auslassanschluss vorliegt, und einer zweiten Position, in der der Einlassanschluss in strömungstechnischer Kommunikation mit dem zweiten Auslassanschluss vorliegt, bewegliches Bauteil umfasst, wobei das Modul (3) weiter eine elektronische Steuerschaltung (63) umfasst, die um die Längsachse (X) herum drehfest und zum Steuern der Verschiebung des zwischen der ersten und zweiten Position beweglichen Bauteils konfiguriert ist.

10. Turbotriebwerk (1) für ein Luftfahrzeug, **dadurch gekennzeichnet, dass** es ein Modul (3) nach einem der vorstehenden Ansprüche umfasst.

## Claims

1. A module (3) for an aircraft turbine engine (1), the module (3) comprising a longitudinal axis (X) and comprising:
- a hub (43) extending around the longitudinal axis (X) and movable in rotation around the longitudinal axis (X),
- vanes (30) carried by the hub (43), each of the vanes (30) being movable about a pitch axis (C) extending radially with respect to the longitudinal axis (X),
- a drive shaft (32) designed to drive in rotation the hub (43) about the longitudinal axis (X),
- a mechanical speed reducer (33) configured to connect a low-pressure shaft (9) of the turbine engine (1) to the drive shaft (32), and
- a device (45) for changing the pitch of the vanes (30) about their pitch axes (C), the device (45) comprising:
∘ a hydraulic actuator (46) movable in rotation about the longitudinal axis (X) and configured to drive the vanes (30) about their pitch axes (C),
∘ a pump (54) for supplying fluid to the hydraulic actuator (46) comprising a transmission shaft (54a) and an envelope (54b) arranged around the transmission shaft (54a) and secured in rotation to the drive shaft (32), and
∘ an electric machine (55) comprising a rotor (56) secured in rotation to the transmission shaft (54a) and a stator (57) fixed in rotation about the longitudinal axis (X), the stator (57) being intended to be connected to an power supply cable (62),
**characterised in that** the speed reducer (33) comprises a first element (36) designed to cooperate with the low-pressure shaft (9), a second element (37) secured in rotation to the drive shaft (32) and a third element (38) fixed in rotation about the longitudinal axis (X),
and **in that** a passage (38a) for the power supply cable (62) is provided in the third element (38) of the speed reducer (33).

2. The module according to the preceding claim, **characterised in that** the electric machine (55) comprises an electric motor (55a') formed by the rotor (56) and a second stator (58) movable in rotation about the longitudinal axis (X) and an electrical transformer (55b) comprising the stator (57) and a second rotor (59) movable in rotation about the longitudinal axis (X).

3. The module as claimed in claim 1, **characterised in that** the electric machine (55) comprises an electric motor (55a) formed by the stator (57) and the rotor (56).

4. The module according to any one of the preceding claims, **characterised in that** the rotor (56) and stator (57) are coaxial.

5. The module according to any one of the preceding claims, **characterised in that** the pump (54) is a fixed or variable displacement pump.

6. The module according to any one of the preceding claims, **characterised in that** the first element (36) is a sun gear, the second element (37) is a ring gear and the third element (38) is a planet carrier.

7. The module according to any of the preceding claims, **characterised in that** the electric machine (55) is arranged axially between the hydraulic actuator (46) and the speed reducer (33).

8. The module according to any one of the preceding claims, **characterised in that** it comprises a hydraulic accumulator (66) movable in rotation about the longitudinal axis (X) and in fluid communication with the supply pump (54).

9. The module according to the preceding claim, **characterised in that** it comprises a hydraulic directional valve (60) movable in rotation about the longitudinal axis (X) and comprising an inlet port connected to the accumulator (66) and a first outlet port connected to a first chamber of the hydraulic actuator (46), and a second outlet port connected to a second chamber of the hydraulic actuator (46), the directional valve (60) further comprising a member movable between a first position in which the inlet port is in fluid communication with the first outlet port and a second position in which the inlet port is in fluid communication with the second outlet port, the module (3) further comprising an electronic control circuit (63) fixed in rotation about the longitudinal axis (X) and configured to control the displacement of the movable member between the first and second positions.

10. A turbine engine (1) for an aircraft, **characterised in that** it comprises a module (3) according to any one of the preceding claims.
